# EUROPÄISCHE PATENTSCHRIFT

(11) **EP 1 063 455 B1**
(45) Veröffentlichungstag und Bekanntmachung des Hinweises auf die Patenterteilung: **15.02.2006**
(21) Anmeldenummer: 00111240.8
(22) Anmeldetag: 25.05.2000
(51) Int. Cl.: F16J 15/32

(54) **Dichtflansch zur Abdichtung von einem sich drehenden Maschinenteil**
Flange for sealing a rotating machine part
Bride pour l'étanchéité d'une pièce tournante de machine

(30) Priorität: 23.06.1999 DE 19928647
(43) Veröffentlichungstag der Anmeldung: 27.12.2000
(73) Patentinhaber: SKF Sealing Solutions GmbH, 51379 Leverkusen (DE)
(72) Erfinder: Stephan, Bernd, 42897 Remscheid-Lennep (DE); Görg, Alexander, 40699 Erkrath (DE)
(74) Vertreter: Gosdin, Michael

(56) Entgegenhaltungen:
- DE-A- 4 216 568
- US-A- 5 152 538
- HEINE S ET AL: "ANWENDUNG VON THERMOPLASTEN ZUR ABDICHTUNG AN KFZ-MOTOREN" ATZ AUTOMOBILTECHNISCHE ZEITSCHRIFT, FRANCKH'SCHE VERLAGSHANDLUNG. STUTTGART, DE, 1997, Seiten 54-59, XP000687305 ISSN: 0001-2785
- HEINE S ET AL: "MODULES FOR REAR CRANKSHAFT SEALING" AUTOMOTIVE ENGINEERING, SOCIETY OF AUTOMOTIVE ENGINEERS. WARRENDALE, US, Bd. 105, Nr. 11, 1. November 1997 (1997-11-01), Seiten 71-73, XP000725709 ISSN: 0098-2571

## Beschreibung

Die Erfindung betrifft einen Dichtflansch zur Abdichtung eines sich drehenden Maschinenteils,
- mit mindestens einem ersten Dichtelement, das statisch an einem abzudichtenden Maschinenteil angelegt werden kann, und
- mindestens einem zweiten Dichtelement, das eine dynamische Abdichtung zu dem sich drehenden Maschinenteil herstellt,

wobei der Dichtflansch mit Befestigungselementen an dem abzudichtenden Maschinenteil befestigt werden kann.

Dichtflansche zur Abdichtung von sich drehenden Maschinenteilen, beispielsweise Kurbelwellen von Kraftfahrzeugmotoren, der gattungsgemäßen Art sind bekannt. Die Flanschteile bestehen in der Regel aus einem Blechteil, das entsprechend den Bedürfnissen gestanzt und gegebenenfalls tiefgezogen ist und das sowohl mit Dichtungselementen für die statische Abdichtung als auch mit solchen für die dynamische Abdichtung der rotierenden Kurbelwelle ausgestattet sind. Die Flanschbleche können dabei mit einer Beschichtung zum Schutz vor Korrosion versehen sein. An den Blechträger werden über Haftvermittler die benötigten Dichtelemente angebracht. Bekannt ist weiterhin, dass der Dichtflansch mit weiteren Elementen, z.B. Drehzahlsensoren oder ähnliches, bestückt werden kann, wobei dann diese Elemente mit üblichen Schraub- oder Nietverbindungen am Dichtflansch fixiert sind.

Aus der **US 5,152,538** ist ein Dichtflansch der gattungsgemäßen Art bekannt, der weitgehend aus Metall besteht. Der Tragkörper für die Radialdichtung ist mit einem Kunststoffteil verbunden, dass am metallischen Teil des Dichtflansches festgelegt ist.

Aus der **DE 42 16 568 A1** geht ein Dichtflansch hervor, der im wesentlichen aus Kunststoff gefertigt ist. Der Grundkörper des Dichtflansches weist eine Ausnehmung auf, in die ein metallisches Trägerteil eingesetzt werden kann, an dem die Radialdichtung angeordnet ist.

Nachteilhaft an den bekannten Lösungen ist jedoch, dass die Herstellung multifunktionaler Dichtflansche einen erheblichen Fertigungsaufwand bedeutet, wenn nämlich verschiedene Elemente am Dichtflansch angeschraubt, angenietet oder angeschweißt werden müssen; weiterhin ist es als nachteilhaft erkannt worden, dass dadurch der Dichtflansch in seiner Formstabilität geschwächt werden kann.

Der Erfindung liegt daher die **Aufgabe** zugrunde, einen Dichtflansch der eingangs genannten Art derart weiterzuentwickeln, dass eine sehr einfache Herstellung möglich ist, bei der gleichzeitig sichergestellt ist, dass der Dichtflansch sehr formstabil ist, auch wenn verschiedene zusätzliche Elemente (Sensoren etc.) neben den eigentlichen Dichtelementen integriert werden sollen. Die Integration solcher zusätzlicher Elemente soll gleichermaßen in einfacher Weise möglich sein.

Die **Lösung** dieser Aufgabe durch die Erfindung ist dadurch gekennzeichnet, dass der Dichtflansch aus einem skelettartigen Träger aus Metall besteht, der weitgehend von Kunststoffinaterial ummantelt ist, wobei der Träger aus Metall so geformt ist, dass er sich in die Bereiche des Dichtflansches erstreckt, die im Betrieb des Dichtflansches einer hohen Belastung ausgesetzt sind, und wobei der Dichtflansch Durchgangsbohrungen für die Befestigungselemente aufweist, wobei der Träger aus Metall so ausgebildet ist, dass er sich, vorzugsweise ringförmig, um die Durchgangsbohrungen herum erstreckt.

Erfindungswesentlich ist also, dass für den Dichtflansch zumindest ein Trägerelement (Skelett) aus hochfestem Material vorgesehen wird, das zumindest teilweise mit einem Kunststoff versehen bzw. umgeben ist.

Gemäß einer ersten Fortbildung ist vorgesehen, dass das Kunststoffmaterial durch einen Spritzgießvorgang um den Träger umspritzt ist.

Eine besonders vorteilhafte Ausgestaltung ergibt sich, wenn vorgesehen wird, dass der Träger aus Metall so ausgebildet ist, dass er sich vorzugsweise ringförmig um den Bereich des zweiten Dichtelements herum erstreckt.

Damit der Träger beim Verschrauben des Dichtflansches eine feste Anlage der Befestigungselemente schafft, kann weiterhin vorgesehen werden, dass der Träger zwar weitgehend von Kunststoffmaterial ummantelt ist, sich jedoch im Bereich der Durchgangsbohrungen für die Befestigungselemente bis an die Oberfläche des Dichtflansches bzw. Kunststoffmaterials erstreckt.

Der Träger besteht, wie bereits erwähnt, aus hochfestem Material, wobei hierunter Metall, insbesondere Blech, zu verstehen ist. Der Träger kann auch aus Leichtmetall bestehen. Für das Kunststoffmaterial kann ein Thermoplast oder ein Duroplast zum Einsatz kommen.

Sowohl das erste als auch das zweite Dichtelement für die statische bzw. für die dynamische Abdichtung kann über einen Haftvermittler an das Kunststoffmaterial des Dichtflansches angeschlossen sein. Alternativ dazu ist es aber auch möglich, dass das jeweilige Dichtelement direkt an das Kunststoffinaterial des Dichtflansches angespritzt ist.

Vorteilhafterweise ist vorgesehen, dass mit dem Kunststoffmaterial weitere Elemente, insbesondere Sensoren und Verschraub- oder Verklemmelemente, verbunden sind; diese sind vorzugsweise durch einen Kunststoff-Umspritzvorgang mit dem Kunststoffmaterial verbunden.

Eine besonders vorteilhafte Ausgestaltung ergibt sich, wenn vorgesehen wird, dass das Volumen des Kunststoffmaterials mindestens 60 %, vorzugsweise mindestens 80 %, des Gesamtvolumens des Dichtflansches ausmacht.

Durch die erfindungsgemäße Ausgestaltung wird erreicht, dass der Dichtflansch durch Einsatz eines hochfesten Skeletts bzw. Trägers einerseits die erforderliche Stabilität aufweist, dass andererseits in einfacher fertigungstechnischer Weise weitere Funktionselemente an dem Träger angebracht werden können. Das Umspritzen von Kunststoffmaterial eignet sich hierfür in besonderer Weise.

In der Zeichnung sind Ausführungsbeispiele der Erfindung dargestellt.
- Figur 1: zeigt in perspektivischer Ansicht einen Dichtungsflansch, in
- Figur 2: ist der in diesem Dichtungsflansch zum Einsatz kommende Träger zu sehen,
- Figur 3: stellt eine rückseitige Ansicht des Dichtungsflansches gemäß Figur 1 dar, und in
- Figur 4: ist die rückseitige Ansicht des Trägers zu sehen, der im Flansch gemäß Figur 1 zum Einsatz kommt,
- Figur 5: zeigt einen Dichtflansch, der weitgehend aus Metall besteht und mit einem Kunststoffblock formschlüssig in Verbindung steht, in
- Figur 6: ist eine ähnliche Lösung wie in Figur 5 dargestellt, wobei ein formschlüssig mit dem Träger verbundener Kunststoffblock zum Einsatz kommt,
- Figur 7: zeigt schließlich eine weitere Alternative zu der Lösung gemäß Figur 5 bzw. 6.

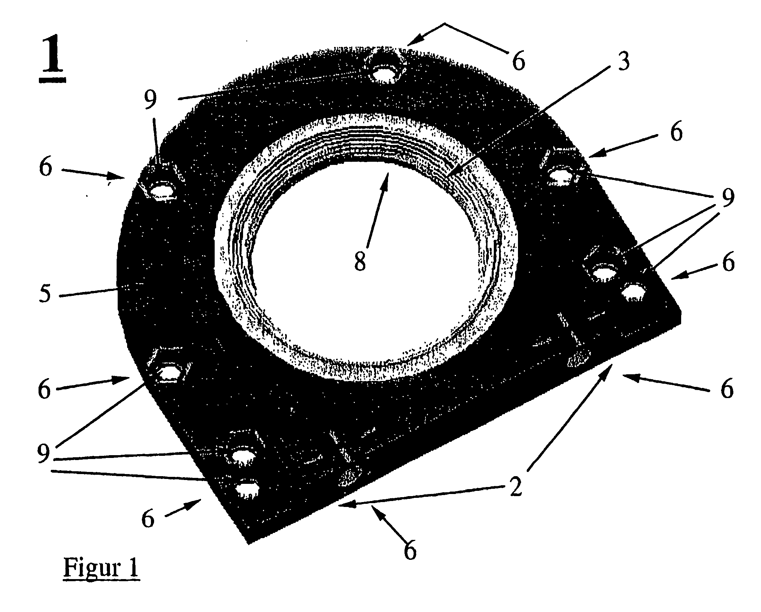

In Figur 1 ist ein Dichtflansch 1 zur Abdichtung eines sich drehenden - nicht dargestellten - Maschinenteils zu sehen. Er hat ein erstes Dichtelement 2, das für eine statische Abdichtung vorgesehen ist. Es befindet sich an der Unter- und Rückseite des Dichtflansches 1 und bewirkt, daß bei der Fixierung des Dichtflansches mit einer Verschraubung die Unter- und Rückseite des Dichtflansches abdichtend an einem Maschinenteil angeordnet ist. Des weiteren weist der Dichtflansch 1 ein zweites Dichtelement 3 auf, das eine dynamische Abdichtung zu einer - nicht dargestellten - Welle herstellt.

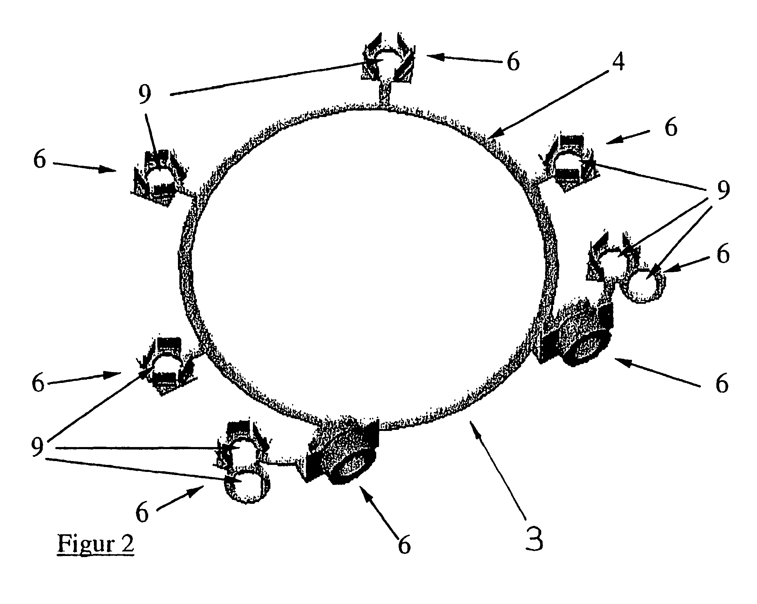

Der Dichtflansch 1 weist ein Skelett in Form eines Trägers 4 auf, der in Figur 2 zu sehen ist. Dieser Träger 4 besteht aus hochfestem Material, wobei hierunter zu verstehen ist, daß dieses Material - beispielsweise Blech - eine sehr viel größere Festigkeit aufweist als das Kunststoffmaterial, aus dem der Dichtflansch ansonsten auch noch besteht. Wie nämlich in Figur 1 zu sehen ist, ist der Träger 4 weitgehend mit Kunststoffmaterial 5 umspritzt. Wie den beiden Figuren 1 und 2 entnommen werden kann, ergeben sich dabei derartige Volumenverhältnisse, daß das Volumen des Trägers 4 allenfalls 20 % des gesamten Flanschvolumens ausmacht.

Der Dichtflansch 1 ist im Betrieb hohen Belastungen ausgesetzt, die sich allerdings auf einige wenige Bereiche 6 konzentrieren. Namentlich treten im Bereich der Durchgangsbohrungen 9 hohe Spannungen auf, wenn der Dichtflansch mit Schrauben an seinem Gehäuse festgelegt wird. Daher ist vorgesehen, daß der Träger 4 - siehe Figur 2 - so ausgebildet ist, daß er diese Bereiche hoher Belastung 6 unterstützt, sie vorzugsweise ringförmig umgibt, so daß eine optimale Kraftverteilung erfolgen kann. Wie ebenfalls zu sehen ist, ist der Bereich des zweiten, dynamischen Dichtelements 3 ebenfalls vom Träger 4 ringförmig umgeben, so daß sich auch dieser Bereich durch hohe Stabilität auszeichnet. In diesen Bereichen übernimmt der Träger 4 eine zusätzliche, stützende Funktion des statischen Dichtelements 2 auf der Rückseite des Flansches gemäß Figur 1.

Während der Dichtflansch nach Figur 1 weitgehend von Kunststoffmaterial umspritzt ist, ist trotzdem vorgesehen, daß der Träger 4 im Bereich der Durchgangsbohrungen 9 so ausgestaltet ist, daß er sich bis an die Flanschoberfläche erstreckt und so einen definierten Anschlag für die Befestigungselemente beim Verschrauben des Flansches mit dem Gehäuse bildet.

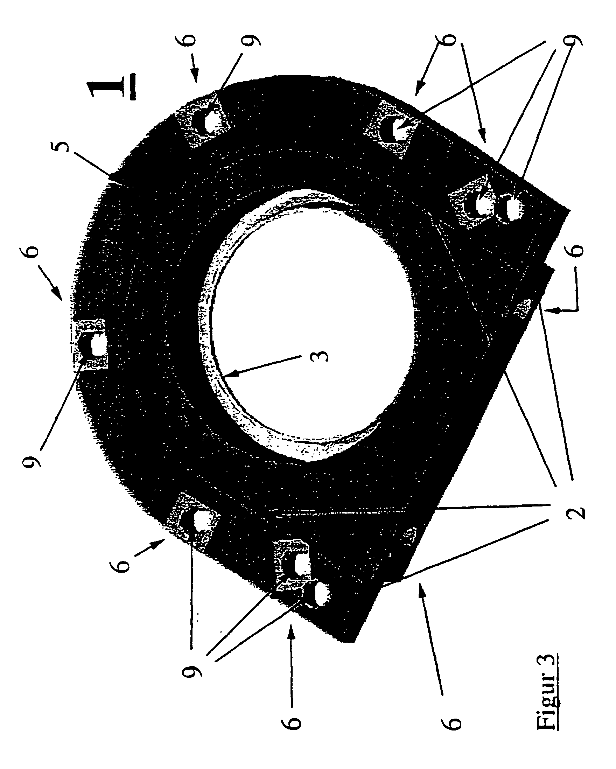

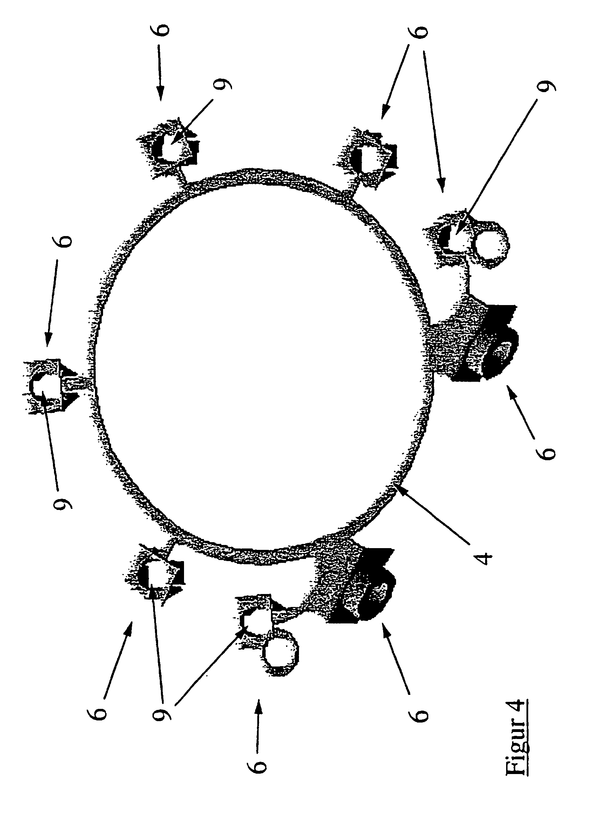

Diese Verhältnisse sind sehr gut anhand der Figuren 3 und 4 zu erkennen, die im wesentlichen dieselbe Konstellation wie in den Figuren 1 und 2 zeigen. Gut zu erkennen ist hier jedoch, daß der Träger 4 (siehe Figur 4) in den Bereichen der Durchgangsbohrungen besonders stabil ausgeformt ist, so daß an diesen kritischen Stellen des Dichtflansches 1 hinreichende Stabilität vorliegt.

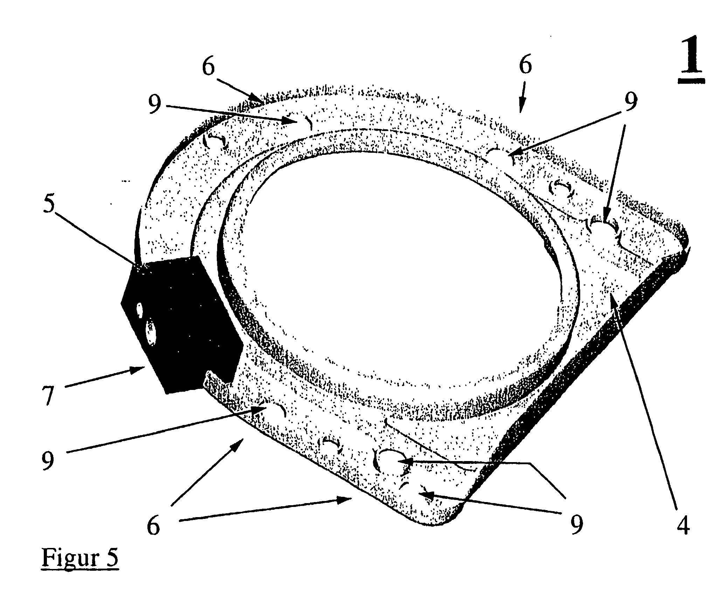

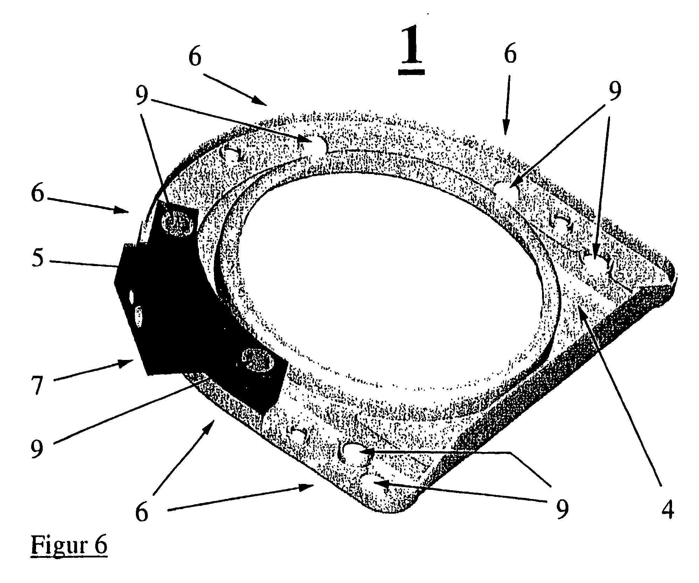

In den Figuren 5 und 6 ist ein Beispiel das das Verständnis der Erfindung erleichtert und keine Ausführungsform der Erfindung darstellt.

Der Dichtflansch 1 besteht hier aus einem Träger 4 aus Blech, wobei dieser Träger der weitgehend bekannten Geometrie eines Dichtflansches entspricht. Der Träger ist gestanzt und tiefgezogen und bildet dadurch alle Elemente (Durchgangsbohrungen) für die Befestigung des Flansches 1 an seinem Motorgehäuse aus. Allerdings ist auch hier eine hybride Bauweise dergestalt realisiert, daß der Träger 4 aus Metall mit einem Funktionselement aus Kunststoff 5 in Form eines Kunststoffblocks 7 in Verbindung steht. Dieser Kunststoffblock kann ein - nicht dargestelltes - weiteres Funktionselement, beispielsweise einen Sensor zur Aufnahme der Motordrehzahl, beinhalten oder zu dessen Befestigung dienen.

Der Block 7 ist, wie in Figur 5 zu sehen ist, so ausgeformt, daß seine Geometrie genau zu derjenigen des Flansches 1 paßt. Der Block 7 kann insoweit auf den Träger 4 aufgespritzt oder aufgesetzt oder aufgesteckt werden, bevor der Träger an das Gehäuse angeschraubt wird. Insoweit kann eine reib-, stoff-, form- oder kraftschlüssige Verbindung zwischen Träger 4 und Kunststoffmaterial 5 zum Einsatz kommen.

Alternativ dazu - und dieser Fall ist in Figur 6 zu sehen - kann aber auch vorgesehen werden, daß der Kunststoffblock 7 mit zwei Befestigungselementen (Schrauben oder Nieten) zusammen mit dem Träger 4 am Maschinenteil befestigt wird, wodurch sich eine kraft- bzw. formschlüssige Verbindung zwischen Träger 4 und Kunststoffblock 7 ergibt.

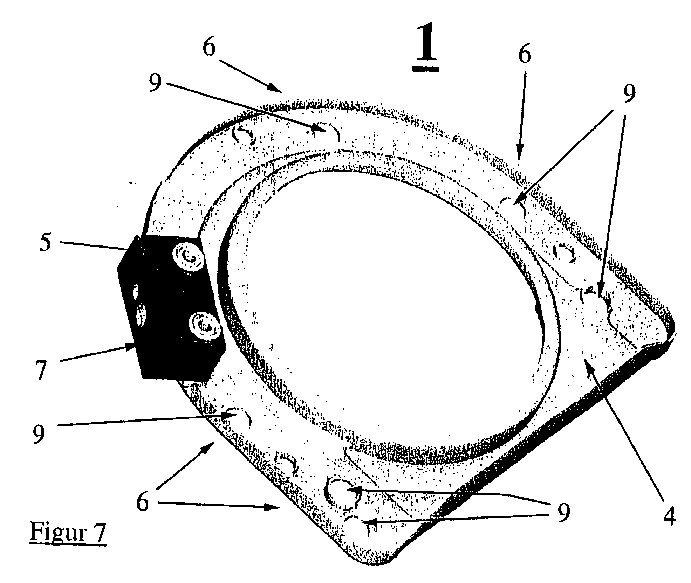

Wie in Figur 7 zu sehen ist, kann alternativ hierzu weiterhin vorgesehen werden, daß der Kunststoffblock 7 zunächst am Träger 4 formschlüssig (z.B. mit Nieten) befestigt wird. Anschließend wird diese vormontierte Baugruppe mit Verschraubungselementen über die Durchgangsbohrungen 9 am Maschinenteil befestigt.

Wie beim Vergleich der Figuren 1 bis 4 einerseits bzw. 5 bis 7 andererseits sofort erkennbar ist, kann sowohl der Anteil des Kunststoffs als auch der Anteil des Metalls im Dichtflansch überwiegen. Im ersten Fall (siehe Figuren 1 bis 4) stellt der Metallträger 4 ein stabilisierendes Skelett dar, daß von Kunststoff weitgehend umspritzt ist. Dadurch wird eine aufwendige Blechumformung substituiert und trotzdem für die Anwendung notwendige Betriebssteifigkeit erreicht. Im Falle der Lösung gemäß der Figuren 5 bis 7 steht indes die Möglichkeit im Vordergrund, notwendige bzw. gewünschte funktionserweiterende Anwendungen (Sensoren zur Erfassung der Kurbelwellendrehzahl bzw. des Kurbelwellendrehwinkels) in einfacher Weise in den Dichtflansch zu integrieren. In beiden Fällen ergibt sich ein reduzierter Herstellungsaufwand, und auch der Aufwand bei der Montage des Dichtflansches an seinem Gehäuse ist reduziert.

### Bezugszeichenliste

- 1: Dichtflansch
- 2: erstes, statisches Dichtelement
- 3: zweites, dynamisches Dichtelement
- 4: Träger aus hochfestem Material (Metallträger)
- 5: Kunststoffmaterial
- 6: Bereiche hoher Belastung
- 7: Kunststoffblock
- 8: Bereich des zweiten Dichtelements 3
- 9: Durchgangsbohrungen

## Patentansprüche

1. Dichtflansch (1) zur Abdichtung eines sich drehenden Maschinenteils,
- mit mindestens einem ersten Dichtelement (2), das statisch an einem abzudichtenden Maschinenteil angelegt werden kann, und
- mindestens einem zweiten Dichtelement (3), das eine dynamische Abdichtung zu dem sich drehenden Maschinenteil herstellt,
wobei der Dichtflansch (1) mit Befestigungselementen an dem abzudichtenden Maschinenteil befestigt werden kann,
**dadurch gekennzeichnet,**
**dass** der Dichtflansch (1) aus einem skelettartigen Träger (4) aus Metall besteht,
der weitgehend von Kunststoffmaterial ummantelt ist,
wobei der Träger (4) aus Metall so geformt ist, dass er sich in die Bereiche (6) des Dichtflansches (1) erstreckt, die im Betrieb des Dichtflansches (1) einer hohen Belastung ausgesetzt sind, und
wobei der Dichtflansch (1) Durchgangsbohrungen (9) für die Befestigungselemente aufweist, wobei der Träger (4) aus Metall so ausgebildet ist, dass er sich, vorzugsweise ringförmig, um die Durchgangsbohrungen (9) herum erstreckt.

2. Dichtflansch nach Anspruch 1, **dadurch gekennzeichnet, dass** das Kunststoffmaterial (5) durch einen Spritzgießvorgang um den Träger (4) umspritzt ist.

3. Dichtflansch nach Anspruch 1 oder 2, **dadurch gekennzeichnet, dass** der Träger (4) aus Metall so ausgebildet ist, dass er sich, vorzugsweise ringförmig, um den Bereich (8) des zweiten Dichtelements (3) herum erstreckt.

4. Dichtflansch nach einem der Ansprüche 1 bis 3, **dadurch gekennzeichnet, dass** sich der Träger (4) im Bereich der Durchgangsbohrungen (9) für die Befestigungselemente bis an die Oberfläche des Dichtflansches (1) bzw. Kunststoffinaterials (5) erstreckt.

5. Dichtflansch nach einem der Ansprüche 1 bis 4, **dadurch gekennzeichnet, dass** der Träger (4) aus Leichtmetall besteht.

6. Dichtflansch nach einem der Ansprüche 1 bis 5, **dadurch gekennzeichnet, dass** das Kunststoffinaterial (5) ein Thermoplast oder ein Duroplast ist.

7. Dichtflansch nach einem der Ansprüche 1 bis 6, **dadurch gekennzeichnet, dass** sich das erste Dichtelement (2) für die statische Abdichtung über einen Haftvermittler an das Kunststoffmaterial (5) des Dichtflansches (1) anschließt.

8. Dichtflansch nach einem der Ansprüche 1 bis 6, **dadurch gekennzeichnet, dass** das erste Dichtelement (2) für die statische Abdichtung direkt an das Kunststoffmaterial (5) des Dichtflansches (1) angespritzt ist.

9. Dichtflansch nach einem der Ansprüche 1 bis 8, **dadurch gekennzeichnet, dass** sich das zweite Dichtelement (3) für die dynamische Abdichtung über einen Haftvermittler an das Kunststoffinaterial (5) des Dichtflansches (1) anschließt.

10. Dichtflansch nach einem der Ansprüche 1 bis 8, **dadurch gekennzeichnet, dass** das zweite Dichtelement (3) für die dynamische Abdichtung direkt an das Kunststoffmaterial (5) des Dichtflansches (1) angespritzt ist.

11. Dichtflansch nach einem der Ansprüche 1 bis 10, **dadurch gekennzeichnet, dass** mit dem Kunststoffmaterial (5) weitere Elemente, insbesondere Sensoren und Verschraub- oder Verklemmelemente, verbunden sind.

12. Dichtflansch nach Anspruch 11, **dadurch gekennzeichnet, dass** die weiteren Elemente durch einen Kunststoff-Umspritzvorgang mit dem Kunststoffmaterial (5) verbunden sind.

13. Dichtflansch nach einem der Ansprüche 1 bis 12, **dadurch gekennzeichnet, dass** das Volumen des Kunststoffmaterials (5) mindestens 60 %, vorzugsweise mindestens 80 %, des Gesamtvolumens des Dichtflansches (1) ausmacht.

## Claims

1. A sealing flange for sealing a rotating machine part,
- having at least one first sealing element (2) which can be applied statically to a machine part to be sealed, and
- at least one second sealing element (3) which establishes a dynamic seal relative to the rotating machine part,
wherein the sealing flange (1) can be fastened by fastening elements to the machine part to be sealed, **characterised in that** the sealing flange (1) comprises a framework-like support (4) consisting of metal, which is substantially encased in plastics material, wherein the support (4) is so formed from metal that it extends into the zones (6) of the sealing flange (1) which are exposed to a high degree of loading while the sealing flange (1) is in operation, and wherein the sealing flange (1) has through-bores (9) for the fastening elements, wherein the support (4) is so formed from metal that it extends, preferably annularly, around the through-bores (9).

2. A sealing flange according to Claim 1, **characterised in that** the plastics material (5) is moulded around the support (4) using an injection-moulding process.

3. A sealing flange according to Claim 1 or 2, **characterised in that** the support (4) is so formed from metal that it extends, preferably annularly, around the zone (8) of the second sealing element (2).

4. A sealing flange according to any one of Claims 1 to 3, **characterised in that** in the vicinity of the through-bores (9) for the fastening elements the support (4) extends up to the surface of the sealing flange (1) or plastics material (5).

5. A sealing flange according to any one of Claims 1 to 4, **characterised in that** the support (4) consists of light metal.

6. A sealing flange according to any one of Claims 1 to 5, **characterised in that** the plastics material (5) is a thermoplastic or a thermosetting plastics material.

7. A sealing flange according to any one of Claims 1 to 6, **characterised in that** the first sealing element (2) for the static seal is attached to the plastics material (5) of the sealing flange (1) via an adhesion promoter.

8. A sealing flange according to any one of Claims 1 to 6, **characterised in that** the first sealing element (2) for the static seal is injection-moulded directly on to the plastics material (5) of the sealing flange (1).

9. A sealing flange according to any one of Claims 1 to 8, **characterised in that** for the dynamic seal the second sealing element (3) is attached to the plastics material (5) of the sealing flange (1) via an adhesion promoter.

10. A sealing flange according to any one of Claims 1 to 8, **characterised in that** the second sealing element (3) for the dynamic seal is injection-moulded directly on to the plastics material (5) of the sealing flange (1).

11. A sealing flange according to any one of Claims 1 to 10, **characterised in that** further elements, in particular sensors and screwing or wedging elements, are joined to the plastics material (5).

12. A sealing flange according to Claim 11, **characterised in that** the further elements are joined to the plastics material (5) by injection-moulding plastics material around them.

13. A sealing flange according to any one of Claims 1 to 12, **characterised in that** the volume of the plastics material (5) comprises at least 60 %, preferably at least 80 %, of the total volume of the sealing flange (1).

## Revendications

1. Bride d'étanchéité (1) pour assurer l'étanchéité d'une partie tournante d'une machine, comportant:
- au moins un premier élément d'étanchéité (2) qui peut être appliqué de manière statique sur une partie de machine à rendre étanche,
- au moins un second élément d'étanchéité (3) qui établit une étanchéité dynamique le long de la partie tournante de machine,
étant précisé que la bride d'étanchéité (1) peut être fixée à la partie de machine à rendre étanche, au moyen d'éléments de fixation, **caractérisée en ce que** la bride d'étanchéité (1) est constituée par un support (4) en forme de squelette réalisé en métal et qui est largement enveloppé par un matériau constitué d'une matière plastique, le support (4) en métal étant formé de manière à s'étendre dans les zones (6) de la bride (1) qui sont soumises à une forte contrainte quand la bride (1) est en service, cette bride présentant des alésages de passage pour les éléments de fixation, et le support (4) en métal étant constitué de manière à s'étendre de préférence sous forme annulaire, autour des alésages de passage (9).

2. Bride d'étanchéité selon la revendication 1, **caractérisée en ce que** le matériau en matière plastique (5) est déposé par injection autour du support (4).

3. Bride d'étanchéité selon la revendication 1 ou 2, **caractérisée en ce que** le support (4) en métal est configuré de manière à s'étendre de préférence sous forme annulaire autour de la zone (8) du second élément d'étanchéité (3).

4. Bride d'étanchéité selon une des revendications 1 à 3, **caractérisée en ce que** le support (4) dans la zone des alésages de passage (9) destiné aux élément de fixation s'étend jusqu'à la face supérieure de la bride d'étanchéité (1), c'est-à-dire de la partie en matière plastique (5).

5. Bride d'étanchéité selon une des revendications 1 à 4, **caractérisée en ce que** le support (4) est en métal léger.

6. Bride d'étanchéité selon une des revendications 1 à 5, **caractérisée en ce que** le matériau en matière plastique (5) est une matière thermoplastique ou une matière thermodurcissable.

7. Bride d'étanchéité selon une des revendications 1 à 6, **caractérisée en ce que** le premier élément d'étanchéité (2), destiné à assurer l'étanchéité statique, est raccordé par un agent adhésif à la partie en matière plastique (5) de la bride d'étanchéité (1).

8. Bride d'étanchéité selon une des revendications 1 à 6, **caractérisée en ce que** le premier élément d'étanchéité (2), destiné à assurer l'étanchéité statique, est injecté directement sur la partie en matière plastique (5) de la bride d'étanchéité (1).

9. Bride d'étanchéité selon une des revendications 1 à 8, **caractérisée en ce que** le second élément d'étanchéité (3), destiné à assurer l'étanchéité dynamique, est raccordé par un agent adhésif à la partie en matière plastique (5) de la bride d'étanchéité (1).

10. Bride d'étanchéité selon une des revendications 1 à 8, **caractérisée en ce que** le second élément d'étanchéité (3), destiné à assurer l'étanchéité dynamique, est injecté directement sur la partie en matière plastique (5) de la bride d'étanchéité (1).

11. Bride d'étanchéité selon une des revendications 1 à 10, **caractérisée en ce qu'**à la partie en matière plastique (5) sont reliés d'autres éléments, notamment des capteurs, et des éléments de vissage ou de serrage.

12. Bride d'étanchéité selon la revendication 11, **caractérisée en ce que** les autres éléments sont reliés à la partie en matière plastique (5) par injection périphérique de matière plastique.

13. Bride d'étanchéité selon une des revendications 1 à 12, **caractérisée en ce que** le volume de la partie en matière plastique (5) atteint au moins 60 %, de préférence au moins 80 % du volume total de la bride d'étanchéité (1).
